# EUROPÄISCHE PATENTANMELDUNG

(11) **EP 0 864 480 A1**
(43) Veröffentlichungstag der Anmeldung: **16.09.1998**
(21) Anmeldenummer: 98104563.6
(22) Anmeldetag: 13.03.1998
(51) Int. Cl.: B62B 9/14, B62B 7/14, B62B 9/24

(54) **Transportwagen**

(30) Priorität: 13.03.1997 DE 19710466
(71) Anmelder: Baur, Albert, 86845 Grossaitingen (DE)
(72) Erfinder: Baur, Albert, 86845 Grossaitingen (DE)
(74) Vertreter: Fiener, Josef

(57) **Zusammenfassung**

Zur Erhöhung der Sicherheit und universellen Einsetzbarkeit bei einem Transportvagen (1) mit einer Aufnahmeschale (10) zum Transportieren, insbesondere von Kindern (20, 21), und einem fahrbaren Gestell (3), an dem die Aufnahmeschale (10) befestigt ist, wird vorgeschlagen, daß an der Aufnahmeschale (10) eine Deckelschale (12) aus einem durchsichtigen Material befestigt ist, wobei die Deckelschale (12) in eine offene und eine zumindest teilweise geschlossene Stellung bringbar ist.

## Beschreibung

Die Erfindung bezieht sich auf einen Transportwagen mit einer Aufnahmeschale, insbesondere für Kinder im Säuglings- und Kleinkindalter.

Für Familien mit Kindern besteht beim Transport von Gegenständen außer Haus, insbesondere bei Einkäufen das Problem, Kinder so mit sich zu nehmen, daß sie einerseits stets unter Aufsicht stehen sollen und andererseits die Hände der Elternteile zum Aufnehmen und Mitnehmen von Einkaufsgütern frei bleiben sollen. Die Kinder müssen dabei in der Regel zuerst von der Wohnung zu einem Auto gebracht und sicher in dieses gesetzt werden. Nach einer Fahrt müssen sie vom Auto zu einem Geschäft gebracht werden, wobei kleine Kinder getragen oder in einem Kinderwagen, in den sie umzulagern sind, gefahren werden müssen. Da Kinderwagen in der Regel nicht mit in Geschäfte genommen werden sollen/dürfen, müssen die Kinder in Einkaufswagen umgesetzt werden. Ein ständiges Umsetzen und Befestigen der Kinder in verschiedenen Sitzen ist jedoch zeitraubend und lästig.

Zum Einkaufen werden in größeren Geschäften oder Supermärkten zwar üblicherweise Einkaufswagen bereitgestellt, die aus einem verfahrbaren Gestell mit einem darauf befestigten, nach vorne hin schmaler und flacher werdenden Korb und einer Schubstange bestehen, wobei zwischen Korb und Schubstange ein ausklappbarer Sitz für kleine Kinder vorgesehen ist. Ein solcher Sitz ermöglicht jedoch nur die Mitnahme eines Kleinkindes und ist zudem relativ unbequem, so daß das Kind schnell ungeduldig wird.

Aus der US 4,805,935 ist ein Einkaufswagen bekannt, bei dem ein Sitz auf dem Fahrgestell unterhalb des Korbes bekannt ist. Diese Vorrichtung ist jedoch wegen des geringen vertikalen Abstandes zwischen der Sitzfläche auf dem Fahrgestell und der Unterseite des Korbes ebenfalls nur für ein kleines Kind geeignet. Zudem besteht das Problem, daß das Kind nicht mehr beobachtet werden kann, wenn der Boden des Korbes mit Einkaufsgütern bedeckt ist. Außerdem besteht eine sehr große Verletzungsgefahr für das Kind, wenn es z. B. während der Fahrt eine Hand oder einen Fuß neben dem Rahmen des Fahrgestells hält und der Wagen mit einem anderen Wagen oder einem Regalsockel zusammenstößt. Weiterhin ist die Sicht des Kindes beschränkt, wodurch Kinder schnell ungeduldig werden und die Eltern den Einkauf entsprechend kurz gestalten müssen.

Aus der DE 43 37 917 A1, entsprechend der DE 92 15 616.9 U1 ist ein Einkaufswagen bekannt, bei dem neben dem Sitz zwischen Schubstange und dem Korb ein weiterer Sitz auf dem Fahrgestell angeordnet ist. Dabei ist der weitere Sitz auf dem vorderen Abschnitt des Fahrgestells angeordnet, wobei das Fahrgestell unter dem Korb so weit nach vorne hinausragt, daß der Sitz vor dem Korb angeordnet ist. Diese Anordnung ermöglicht zwar die Mitnahme eines weiteren, insbesondere größeren Kindes, jedoch besteht auch hier ein gewisses Verletzungsrisiko. Zudem muß das Kind bei einer solchen Sitzanordnung selbständig und so sicher sitzen können, daß es bei der Fahrt um Kurven nicht von der Sitzfläche fällt. Die Mitnahme von zwei Kleinkindern ist daher nicht möglich. Weiterhin kann nicht verhindert werden, daß das Kind aufsteht und wegläuft oder in Regale greift.

Säuglinge können jedoch in keinem dieser Wagen auf bequeme Weise mitgenommen werden. In der neueren DE 296 09 208 U1 ist daher ein stapelbarer Einkaufswagen mit einer Babyschale vorgeschlagen worden, wobei eine Schale hinter dem Griffbereich über dem Korbabschnitt des Wagens befestigt ist. Dafür ist bei einer derartigen Anordnung aber der Einbau eines Sitzes für Kleinkinder nicht mehr möglich.

Aus der DE 296 15 793 U1 ist weiterhin ein Einkaufswagen bekannt, bei dem quer zur Fahrtrichtung über der Mitte des Korbabschnitts eine Babyschale befestigt ist, die zur Aufnahme eines Kindersitzes geeignet ist, wobei jedoch auch die vorstehenden Nachteile weitgehend gelten.

Aus der DT 26 44 257 A1 ist zudem ein Kinderwagen bekannt, bei dem in einem Grundrahmen eine Schale zur Aufnahme eines Kindes um eine horizontale Achse senkrecht zur Fahrtrichtung verschwenkbar gelagert ist. In der Schale ist eine z. B. tuchförmige Einlage eingespannt, die so verstellbar ist, daß sie eine Art Tasche oder Hängematte ausbildet. Dadurch kann dieser Wagen individuell auf die jeweilige Größe eines Kindes angepaßt werden und es wird in einigen der möglichen Stellungen auch Stauraum für Gepäck geschaffen. Bei diesem Vorschlag ist weiterhin von Nachteil, daß das darin sitzende Kind mit Gurten befestigt werden muß, um ein Herausfallen oder Aufstehen zu vermeiden. Zudem kann das Kind in Regale oder Wagenteile greifen, so daß die Verletzungsgefahr noch relativ groß ist.

Der Erfindung liegt daher die Aufgabe zugrunde, einen Transportwagen mit einer Aufnahmeschale zur Beförderung insbesondere von Kindern im Säuglings- und Kleinkindalter zu schaffen, der universell einsetzbar und besonders einfach handhabbar ist, sowie für die Kinder eine erhöhte Sicherheit bietet.

Diese Aufgabe wird gelöst durch einen Transportwagen gemäß den Merkmalen des Anspruches 1.

Mit der vorgeschlagenen eiförmig ausgebildeten Aufnahmeschale sind Kinder rundum sicher untergebracht und müssen somit nicht durchgehend beaufsichtigt werden. Das durchsichtige Deckelmaterial ermöglicht einen freien Blick für das Kind und auf das Kind, sowie ggf. in dem Behältnis liegende Waren, so daß dieser Transportwagen auch zum Einkaufen sehr gut geeignet ist. In der geöffneten Stellung der Deckelschale können auch zwei Kinder in die beiden Schalen gelegt werden. Zudem ist daran in bevorzugter Ausführung eine Plattform zum Transport von Waren gelagert.

Von besonderem Vorteil ist die eiförmige Gestaltung auch beim Be- und Entladen in ein Kraftfahrzeug, da diese allseits abgerundete Aufnahmeschale leicht auf eine Rücksitzbank geschoben werden kann, ohne die Gefahr, daß der Sitzbezug aufgeschlitzt wird. Weitere vorteilhafte Ausgestaltungen sind Gegenstand der abhängigen Ansprüche.

Ausführungsbeispiele der Erfindung werden nachfolgend anhand der Zeichnungen beschrieben, bei denen
- Fig. 1:: schematisch einen Kinder-Transportwagen mit einer Aufnahmeschale in Seitenansicht darstellt;
- Fig. 2:: eine abgewandelte Ausführungsform mit vereinfachter Gestellkonstruktion;
- Fig. 3:: eine Ausführung als Rad-Transportanhänger;
- Fig. 4:: eine Oberladestellung in ein Kraftfahrzeug;
- Fig. 5:: eine alternative Beladestellung in ein Fahrzeug; und
- Fig. 6:: einen zusammengeklappten Transportwagen.

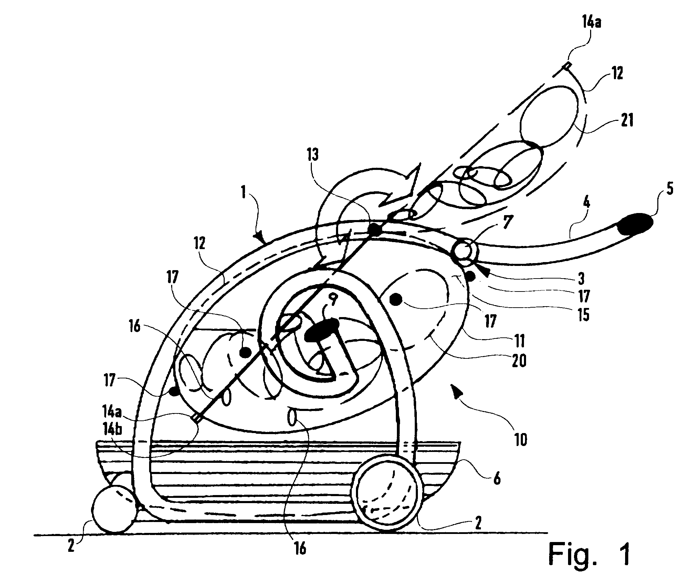

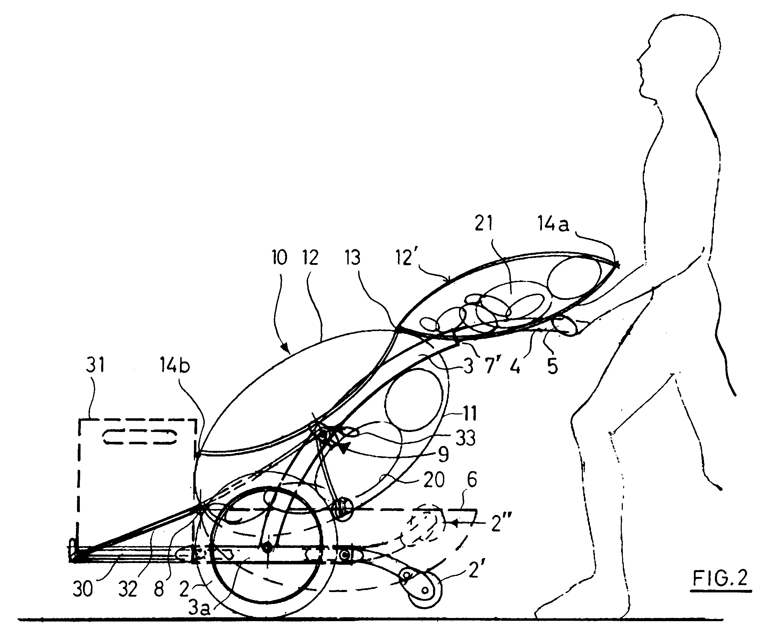

Wie in Fig. 1 dargestellt, besteht ein Transportwagen 1 aus einem Gestell 3 mit zwei seitlichen, gebogenen Holmen, die durch Querverstrebungen, insbesondere Radachsen fest miteinander verbunden sind. Vorzugsweise weisen die beiden seitlichen Holme des Gestells 3, wie dargestellt, für eine Federungswirkung beim Schieben oder Ziehen des Gestells 3 einen im wesentlichen spiralförmigen und daher federnden Aufbau auf. Im unteren Bereich des Gestells 3 sind Räder 2 an diesem gelagert. Am oberen Ende jedes seitlichen Holmes ist über eine ver- und feststellbare Verbindung 7 eine seitliche Führungsstange 4 angelenkt. Die beiden äußeren Enden der seitlichen Führungsstangen 4 sind über eine Querstange 5 miteinander verbunden, die somit als Handgriff bzw. Schub- oder Zugstange dient. Die Verbindung 7 ist hier als Kippgelenk ausgebildet, um das Gestell 3 zusammenklappen zu können, während hierzu in Fig. 2 als alternative Verbindung eine teleskopierbare Schiebeverbindung 7' zwischen den Holmen des Gestells 3 und den beiden Führungsstangen 4 dargestellt ist.

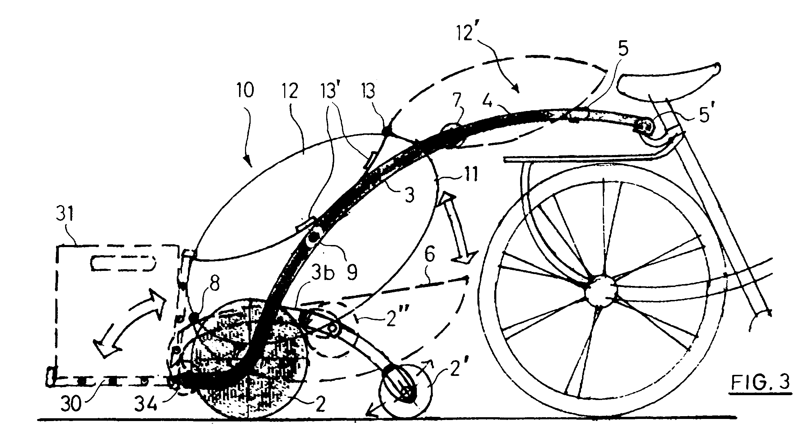

In der in Fig. 3 dargestellten Ausführungsform laufen die beiden seitlichen Führungsstangen 4 zu deren äußeren Enden hin gebogen aufeinander zu und enden nach der Querstange 5 in einer auskragenden Anhängekupplung 5'. Über diese Anhängekupplung 5', die auch als Zubehörteil an den Führungsstangen 4 oder der Querstange 5 befestigt werden kann, ist der Transportwagen 1 in einfacher Weise an ein Fahrrad anzuhängen.

Zwischen den beiden seitlichen Holmen des Gestells 3 ist mittels einer Schwenkachse 9 eine Aufnahmeschale 10 zur Aufnahme eines Kindes 20 pendelnd gelagert. Die Aufnahmeschale 10 weist dabei etwa im Schwerpunkt jeweils ein seitlich abstehendes oder auch geringfügig vertieft angeordnetes Kupplungselement auf, das mit einem gegenüberliegenden Kupplungselement der Schwenkachse 9 jeweils am seitlichen Holm des Gestells 3 eingesetzt ist. Die Lagerung erfolgt dabei so, daß die Aufnahmeschale 10 leer oder zusammen mit dem Kind 20 zum einen problemlos aus dem Gestell 3 gehoben bzw. in dieses eingesetzt werden kann. Zum anderen kann die Aufnahmeschale 10 um die Achse des Schwenkgelenkes 9, die durch die beiden seitlichen Holme des Gestells 3 gehalten ist, in eine beliebige, mehr aufrechte Lage (Sitzposition) oder mehr liegende Position stufenlos oder in Raststellungen geschwenkt und dann z. B. mit einem Drehverschluß festgelegt werden. Das Schwenkgelenk 9 kann jedoch auch in der Schwenkposition unfixiert bleiben, so daß sich in Art einer Wiege eine leichte Pendelbewegung um die Schwenkachse 9 ergibt, wobei die Aufnahmeschale 10 aufgrund der tieferen Schwerpunktlage mit darin liegendem Kind 20 immer die hier gezeigte Stellung einnimmt. Diese Pendelbewegung wirkt auf das Kind 20 beruhigend und kann zudem durch Reibungs- oder Schwingungsdämpfer an der Schwenkachse 9 eingestellt werden.

Unter der Aufnahmeschale 10 ist in Fig. 1 zudem ein Korb 6 z. B. aus Edelstahl-Drahtgeflecht oder als Kunststoffwanne zur Aufnahme von Gepäck oder Waren am Gestell 3 befestigt. Dieser Korb 6 kann auch am unteren Bereich der Aufnahmeschale 10 an einer Achse 8 gelagert sein, so daß dieser bei halbschalenförmiger Gestaltung in Art einer längshalbierten Eischale platzsparend an die Aufnahmeschale 10 angelegt werden kann, zur Warenaufnahme jedoch einfach nach unten geklappt werden kann, wie dies in Fig. 2 in Strichlinien angedeutet ist.

Die Aufnahmeschale 10 zur Aufnahme eines Kindes 20 besteht aus einer unteren, wannenförmigen Hauptschale 11 und einer Deckelschale 12 aus einem transparenten oder durchsichtigen Material, z. B. einem schlagzähen, bruchfesten Acrylkunstharz. Die Deckelschale 12 ist über ein Gelenk 13 an der Hauptschale 11 angelenkt. Insbesondere in der übereinander liegenden, geschlossenen Stellung (durchgezogene Linie in Fig. 1) sind diese beiden Schalenelemente 11 und 12 über einen Verriegelungsmechanismus 14a, 14b verschließbar, damit ein Kind aus dem geschlossenen, eiförmigen Behältnis nicht hinausgreifen kann und rundum geschützt, z. B. auch absolut sicher vor bissigen Hunden, in diesem aufgenommen wird.

Auch eine Verriegelung in anderen Stellungen ist möglich, um den Kippwinkel zwischen den beiden Schalen 11 und 12 beliebig einstellen zu können, beispielsweise um die Deckelschale 12 zur Durchlüftung geringfügig anzuheben. Verriegelungsmechanismen können entsprechend auch an anderen Stellen entlang der Ränder der Haupt- und der Deckelschale 11 bzw. 12 angeordnet werden. Die Gelenkverbindung 13 zwischen Hauptschale 11 und Deckelschale 12 kann auch als seitliches Klappgelenk oder als Teleskop-Schiebeführung an der Seitenkante ausgebildet sein, wie dies in Fig. 3 mit dem Bezugszeichen 13' angedeutet ist. Hierdurch kann die Deckelschale 12 gegenüber der Hauptschale 11 entlang der hier dargestellten Fahrtrichtung verschoben werden, einerseits vollständig zum Einstieg in die Aufnahmeschale 10 oder nur geringfügig nach vorne oder nach hinten für eine Durchlüftungstellung in der kapselartigen Aufnahmeschale 10.

Wie in Fig. 1 dargestellt, ist die eiförmige Aufnahmeschale 10 bei einer bevorzugten Ausführungsform so aufgeteilt, daß die Hauptschale 11 deutlich größer als die Deckelschale 12 ausgebildet ist. In der aufgeklappten Stellung (Deckelschale 12' in Fig. 2 bzw. in Fig. 1 gestrichelt dargestellt) kann die Deckelschale 12 als Aufnahme für ein weiteres, kleines Kind, insbesondere einen Säugling 21 eingesetzt werden, wobei die Deckelschale 12 bevorzugt auf den Führungsstangen 4 bzw. der Querstange 5 (vgl. Fig. 2) in stabiler Weise aufliegt. Von Vorteil ist hierbei, daß der Säugling 21 in unmittelbarer Nähe und in Blickkontakt mit der den Wagen schiebenden Person sein kann. Die Abdeckung der dann offenen Abschnitte, auch als Sonnen-/Regenschutz, kann dabei durch jalousienartige, klappbare oder wickelbare Abdeckungen erfolgen. Diese Abdeckungen können an der Aufnahmeschale 10 selbst oder auch dem Gestell 3 befestigt sein. Die Deckelschale 12 kann jedoch auch doppelt aufeinanderliegend, ähnlich wie der Korb 6 und die Hauptschale 11 ausgeführt sein, so daß bei der Stellung 12' in Fig. 2 für den Säugling 21 das Kind 20 nach wie vor vollständig durch das unten verbleibende zweite Deckelteil 12 geschützt bleibt.

Durch die gelenkige Lagerung der gesamten Aufnahmeschale 10 an dem Schwenkgelenk 9 kann deren Hauptschale 11 z. B. auch in eine im Uhrzeigersinn um 45° verschwenkte Stellung, bei der das Kind 20 auf dem Rücken mit Blick nach oben liegen würde, oder noch weiter in eine um 90° verschwenkte Stellung gebracht werden, bei der das Ende der Hauptschale 11 abgesenkt ist, an dem die Deckelschale 12 angelenkt ist. Bei der dargestellten Aufteilung der beiden Schalen 11 und 12 dient einem somit gegenüber der Darstellung in Fig. 1 "umgekehrt" liegenden Kind 20, dann mit Blickrichtung zu der schiebenden Person, in dieser Stellung ein Bodenabschnitt 15 als Fußstütze.

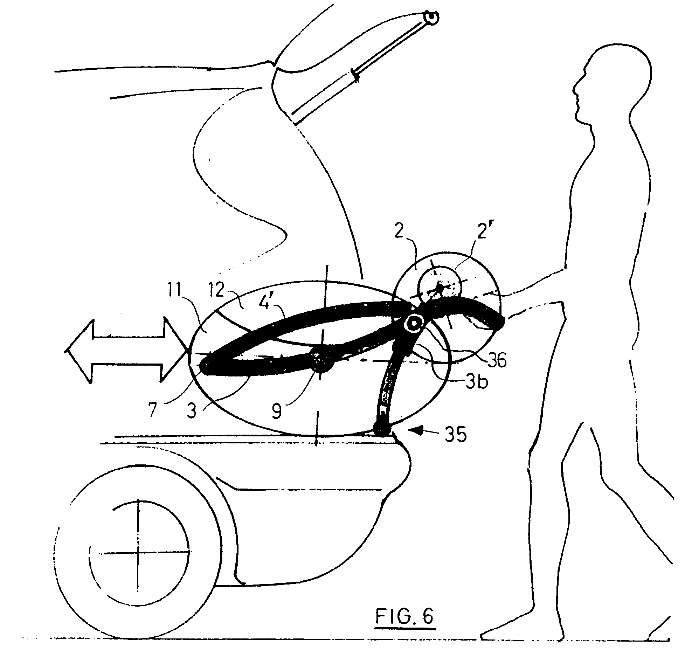

Am Umfang der Hauptschale 11 sind Ösen 16 bzw. Handgriffe 17 oder andere geeignete Befestigungseinrichtungen ausgebildet, die nach dem Herausnehmen der Aufnahmeschale 10 aus dem Grundrahmen oder zusammen mit dem Gestell 3 (vgl. Fig.6) beim Transport in einem Auto zur Aufnahme eines Sicherheitsgurtes und damit sicheren Befestigung dienen. Mittels dieser Befestigungen an der ansonsten möglichst glattflächigen Außenhaut der Aufnahmeschale 10 ist ggf. auch eine Befestigung an einem üblichen Einkaufswagen möglich. Dabei kann die Aufnahmeschale 10 nach Lösen der Schnellverschlüsse an der Schwenkachse 9 auf diesen aufgesetzt, in diesen hineingelegt oder auch unterhalb des Einkaufskorbteils eingesetzt werden. Durch das Verschließen der Deckelschale 12 ist das Kind 20 dabei einerseits vor Verletzungen beim Anstoßen an andere Wagen oder Regale geschützt und kann andererseits nicht unkontrolliert in Regale fassen. Beim Autotransport dient die weitgehend geschlossene Aufnahmeschale 10 zudem bei Unfällen als stoßdämpfende Sicherheitszelle, so daß Schnittverletzungen kaum auftreten können.

Zur Beschäftigung des Kindes 20 kann auch je nach Kindesalter Spielzeug an der Deckelschale 12 befestigt werden. Weiterhin können je nach Dichtigkeit des Verschlusses auch Lüftungsöffnungen in der Deckelschale 12 oder deren Rand ausgebildet werden. Alternativ oder zusätzlich ist zur Belüftung der Einbau eines solarzellenbetriebenen Ventilators z. B. an der oberen "Eispitze" der eiförmigen Aufnahmeschale 10 möglich, wobei auch die Verwendung eines Luftfilters oder Pollenfilters für allergiegefährdete Kinder von besonderem Vorteil ist.

Als Auflagefläche für das Kind 20 in der Hauptschale 11 können eine entsprechend ergonomisch als Sitz-/Liegefläche geformte Schaleninnenwand, Matratzen oder aber auch eine Art Matte verwendet werden. Dabei ist es möglich, die Matte oder eine elastische Liegeauflage so in oder über den bevorzugt in Längsmittelebene geteilten Schalenelementen zu spannen, daß darunter ein Stauraum zum Transport von Windeln, Flaschen oder Einkaufsgut entsteht. Auch ein mehrteiliges Liegeelement kann eingesetzt werden, wobei vorzugsweise je ein Teil des Liegeelements in der Hauptschale 11 liegt und je ein Teil nach außen hin ausgeklappt wird, so daß darauf auch noch ein größeres Kind sitzen kann.

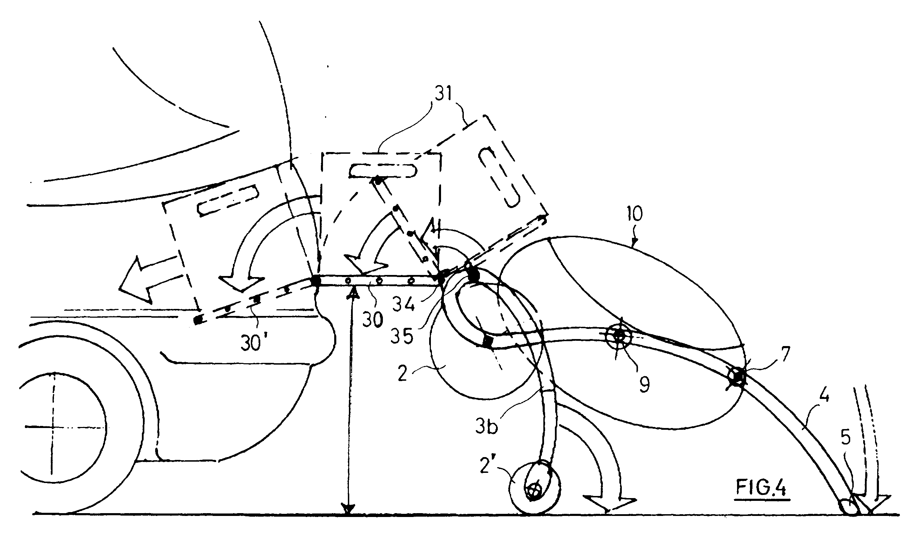

Gemäß Fig. 2 kann als Fußstütze für ein größeres Kind dabei eine Plattform 30 dienen, die am Gestell 3 befestigt ist, beispielsweise eingehängt oder eingesteckt wird. Bevorzugt ist diese Plattform 30 jedoch an einem horizontal verlaufenden Gestellabschnitt 3a verschiebbar oder an einer Klappachse 34 verschwenkbar (vgl. Fig. 3 und 4) gelagert, so daß diese Plattform 30 auf einfache Weise z. B. mit einem Gestänge oder Seilzug 32 und einem weiter oben griffgünstig angeordneten Verstellgriff 33 verstellt werden kann. In der hochgeklappten bzw. eingeschobenen Position dient die Plattform 30 als Anfahrschutz für die Aufnahmeschale 10 bzw. bei rahmenförmiger Gestaltung auch als leiterartige Einstieghilfe für das Kind 20 in die Aufnahmeschale 10 hinein.

Bei der "ausgefahrenen" Position der Plattform 30 dient diese zum Abstellen von Waren, z. B. von einer Getränkekiste 31, so daß auch schwere Waren mit diesen Transportwagen befördert werden können, wie dies in Fig. 3 in der Ausführung als Fahrradanhänger verdeutlicht ist. Hierzu sind die Räder 2 unterschiedlich groß ausgebildet, nämlich einerseits als größere luftbereifte Laufräder und an der zweiten Achse mit kleinen Hilfs- oder Stützräder 2'. Diese können für den kraftsparenden Transport auf nur einer Achse der Laufräder in die höhere Position 2'' hochgeschwenkt werden. Hierzu ist der untere Gestellabschnitt 3b in Fig. 3 bogenförmig gestaltet, so daß die Stützräder 2' leicht in die Position 2'' verstellt werden können. Diese Gestaltung ist auch für den Treppentransport besonders vorteilhaft.

In Fig. 4 ist eine weitere Funktion dieser Stützräder 2' dargestellt, nämlich als bodennaher Schwenkpunkt für den gesamten Transportwagen 1 als Überladehilfe. Hierbei wird die Plattform 30 etwa auf Kofferraumniveau angehoben, so daß Getränkekisten 31 leicht und rückenschonend be- oder entladen werden können. Der Transportwagen 1 stützt sich hierbei auf den Handgriff bzw. die heruntergeschwenkte Querstange 5 in stabiler Weise ab. Es sei darauf hingewiesen, daß selbst bei dieser Kippbewegung das Kind 20 in der Aufnahmeschale 10 verbleiben kann, da sich diese durch die zentrale Schwenkachse 9 automatisch in die Horizontale einpendelt. In der hier gezeigten Stellung ist die Getränkekiste 31 ggf. mittels einer ausschwenkbaren Hilfs-Plattform 30' in den Kofferraum eines Kraftfahrzeuges kraftsparend überschiebbar. Die Hilfs-Plattform 30' ist an der Vorderkante der Plattform 30 verschwenkbar gelagert, so daß in hochgeklappter Stellung die Kiste 31 sicher gehalten ist.

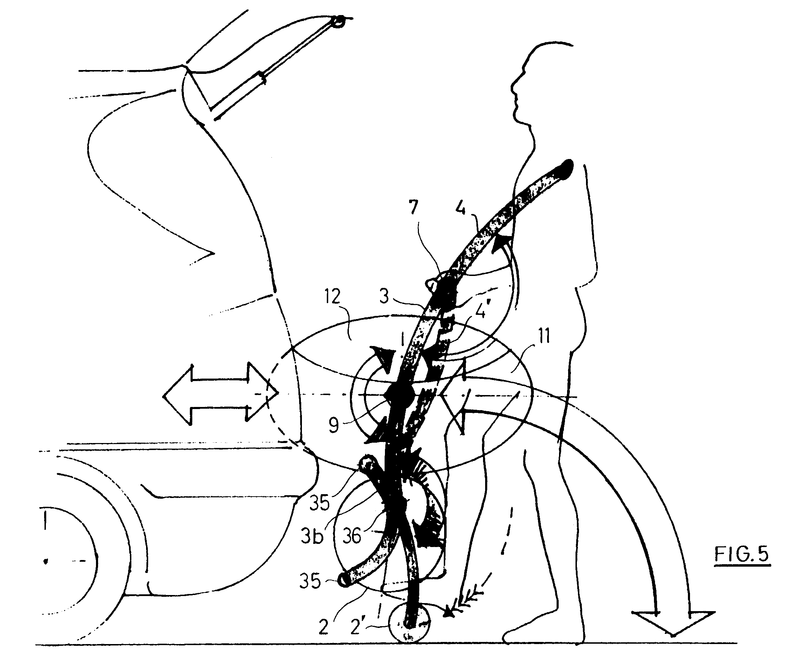

Gemäß Fig. 5 ist der untere Gestellabschnitt 3b an einer Trennstelle 35 mittels Schnellverschlüssen von den Holmen des Gestells 3 lösbar und um ein Schwenkgelenk 36 klappbar. Hierdurch wird die Überladehöhe des Transportwagens 1 noch vergrößert, so daß auch die Aufnahmeschale 10 in das Fahrzeug übergeschoben werden kann, insbesondere eine Rücksitzbank. Hierbei ist die Aufnahmeschale 10 aufgrund der Schwenkachse 9 wiederum im wesentlichen horizontal gehalten, so daß die eiförmige und glattflächige Aufnahmeschale 10 ohne großen Kraftaufwand in das Fahrzeug geschoben werden kann und z. B. ein schlafendes Kind bei diesem Be- oder Entladungsvorgang kaum gestört wird.

In Fig. 6 ist der Beladevorgang praktisch beendet, wobei die Führungsstangen 4, wie auch in Fig. 5 strichliert angedeutet, in die um das Gelenk 7 verschwenkte, raumsparende Position 4' gebracht sind. An der Trennstelle 35 bzw. den daran vorgesehenen Schnellverschlüssen können auch noch kleine Rollen angeordnet sein, um die Verschiebebewegung auf dem Kofferraumboden zu erleichtern. Die Entladebewegung des Transportwagens 1 mit Auseinanderklappen des Gestells 3 erfolgt selbstverständlich in umgekehrter Reihenfolge, wobei auch hier die Aufnahmeschale 10 im wesentlichen immer in der horizontalen Lage bleibt und durch die Deckelschale 12 ein Herausfallen des Kindes 20 (bzw. stattdessen darin untergebrachter Waren) sicher vermieden wird.

## Patentansprüche

1. Transportwagen mit einer Aufnahmeschale zum Transportieren insbesondere von Kindern, und einem fahrbaren Gestell, an dem die Aufnahmeschale befestigt ist,
dadurch **gekennzeichnet,**
daß an der Aufnahmeschale (10) eine Deckelschale (12) aus einem durchsichtigen Material befestigt ist, wobei die Deckelschale (12) in eine offene und eine zumindest teilweise geschlossene Stellung bringbar ist.

2. Transportwagen nach Anspruch 1,
dadurch **gekennzeichnet,**
daß die Deckelschale (12) mit einer Gelenkverbindung (13) an der Hauptschale (11) der Aufnahmeschale (10) angelenkt ist oder mit einer Teleskopführung (13') an der Hauptschale (11) der Aufnahmeschale (10) verschiebbar gelagert ist.

3. Transportwagen nach einem der vorhergehenden Ansprüche,
dadurch **gekennzeichnet,**
daß zur verschwenkbaren Verbindung der Aufnahmeschale (10) mit dem Gestell (3) durch deren Schwerpunkt hindurch am Umfang der Hauptschale (11) eine horizontal verlaufende Schwenkachse (9) vorgesehen ist.

4. Transportwagen nach einem der vorhergehenden Ansprüche,
dadurch **gekennzeichnet,**
daß am Umfang der Aufnahmeschale (10) wenigstens eine Befestigungseinrichtung (16) zum Befestigen der Aufnahmeschale (10) an Autosicherheitsgurten und/oder einem Einkaufswagen ausgebildet ist.

5. Transportwagen nach einem der vorhergehenden Ansprüche,
dadurch **gekennzeichnet,**
daß am Umfang der Hauptschale (11) der Aufnahmeschale (10) wenigstens ein Handgriff (17) vorgesehen ist.

6. Transportwagen nach einem der vorhergehenden Ansprüche,
dadurch **gekennzeichnet,**
daß am Gestell (3) eine Plattform (30) zur Aufnahme von Waren, insbesondere Kisten (31) beweglich gelagert ist.

7. Transportwagen nach einem der Ansprüche 1 bis 6,
dadurch **gekennzeichnet,**
daß am Gestell (3) und/oder an der Aufnahmeschale (10) ein Korb (6) gelagert ist, der im wesentlichen die Außengestalt der Aufnahmeschale (10) aufweist.

8. Transportwagen nach einem der Ansprüche 1 bis 7,
dadurch **gekennzeichnet,**
daß am Gestell (3) eine Anhängerkupplung (5') zum Anhängen des fahrbaren Gestells (3) an ein Fahrrad ausgebildet ist.

9. Transportwagen nach einem der vorhergehenden Ansprüche,
dadurch **gekennzeichnet,**
daß an einem unteren Gestellabschnitt (3a, 3b) wenigstens ein Abstützrad (2') angeordnet ist, das in eine platzsparende Stellung (2'') und/oder Abstützposition (Fig.5) relativ zum Gestell (3) bewegbar ist.

10. Transportwagen nach einem der Ansprüche 1 bis 9,
dadurch **gekennzeichnet,**
daß die Hauptschale (11) aus zwei in Längsmittelebene geteilten Halbschalen zusammengesetzt ist, die von der Gelenkverbindung (13) zusammengehalten sind.
